# EUROPÄISCHE PATENTSCHRIFT

(11) **EP 3 022 997 B1**
(45) Veröffentlichungstag und Bekanntmachung des Hinweises auf die Patenterteilung: **01.05.2019**
(21) Anmeldenummer: 14194175.7
(22) Anmeldetag: 20.11.2014
(51) Int. Cl.: A01B 63/22

(54) **LANDWIRTSCHAFTLICHE BODENBEARBEITUNGSVORRICHTUNG**
AGRICULTURAL SOIL CULTIVATION DEVICE
DISPOSITIF AGRICOLE DE TRAVAIL DU SOL

(43) Veröffentlichungstag der Anmeldung: 25.05.2016
(73) Patentinhaber: Kverneland AS, 4355 Kvernaland (NO)
(72) Erfinder: Scheideler, Bernhard, 37688 Beverungen (DE)
(74) Vertreter: Schweiger, Johannes

(56) Entgegenhaltungen:
- US-A- 4 381 036
- US-A- 4 427 207
- US-A- 4 927 165

## Beschreibung

Die vorliegende Erfindung betrifft eine landwirtschaftliche Bodenbearbeitungsvorrichtung gemäß dem Oberbegriff des Anspruchs 1.

Das Problem bei solchen Vorrichtungen ist, dass Bodenunebenheiten dazu führen können, dass die Stützräder, die zur Abstützung der Vorrichtung auf dem Boden dienen, teilweise vom Boden abheben, wodurch ungleichmäßige Belastungen der Stützräder erzeugt werden, die zu Beschädigungen der Stützräder führen können.

US-A-4 427 207 offenbart eine landwirtschaftliche Bodenbearbeitungsmaschine gemäß dem ersten Teil des Anspruchs 1.

Aus der Druckschrift WO 2012/125 109 ist bekannt, Positionen von hydraulischen Zylindern mittels Sensoren zu erfassen und in Abhängigkeit dieser erfassten Positionen gewünschte Arbeitstiefen von Bodenbearbeitungsgeräten einzustellen.

Die aus dem Stand der Technik bekannte Vorgehensweise ist jedoch störungsanfällig, weil die Sensoren verschmutzt oder beschädigt werden können. Außerdem müssen Signale gemessen, übertragen und verarbeitet werden, so dass geeignete Datenübertragungsverbindungen und -geräte vorgesehen werden müssen, wodurch die Anlage vergleichsweise aufwendig konstruiert ist. Dadurch sind die Anlagen aus dem Stand der Technik kostenintensiv im Betrieb, bei der Wartung und bei Reparaturen.

Es ist daher die Aufgabe der vorliegenden Erfindung, die Nachteile aus dem Stand der Technik zu beseitigen und insbesondere eine vereinfachte und weniger störanfällige Ausgleichung von Bodenunebenheiten zu ermöglichen. Diese Aufgabe wird mit dem Gegenstand des Anspruchs 1 gelöst. Vorteilhafte Weiterbildungen der Erfindung sind in den Unteransprüchen angegeben.

Der Erfindung liegt der Gedanke zugrunde, dass die Stützräder hydraulisch miteinander gekoppelt sind, um Bodenunebenheiten ausgleichen zu können. Durch diese hydraulische Kopplung der Stützräder kann die Ausgleichung der Bodenunebenheiten vorteilhaft vergleichsweise einfach erfolgen. Die Vorrichtung ist daher weniger störanfällig als im Stand der Technik, weil beispielsweise keine Sensoren benötigt werden, die im Betrieb verschmutzen könnten. Außerdem müssen keine Positionsdaten übertragen und verarbeitet werden, so dass auf aufwendige und teure Datenverarbeitungsanlagen verzichtet werden kann.

Die Bodenbearbeitungsvorrichtung (im Folgenden auch Vorrichtung genannt) weist erfindungsgemäß Stützräder auf, von denen mindestens zwei miteinander hydraulisch gekoppelt sind. Die Vorrichtung kann drei, vier, fünf, sechs oder mehr Stützräder aufweisen, von denen mindestens zwei miteinander hydraulisch gekoppelt sind. Es können auch drei, vier, fünf oder mehr Stützräder miteinander hydraulisch gekoppelt sein.

Bevorzugt ist es, dass die Stützräder paarweise miteinander hydraulisch gekoppelt sind. Dies hat den Vorteil, dass die Ausgleichseinrichtung besonders einfach und dadurch weniger störungsanfällig ausgebildet werden kann. Besonders bevorzugt ist es, wenn in horizontaler Richtung gesehen benachbart angeordnete Stützräder hydraulisch miteinander gekoppelt sind, weil dann die Bodenunebenheiten effizienter ausgeglichen werden können. Ganz besonders bevorzugt ist es, wenn in horizontaler Richtung gesehen benachbarte Stützräder paarweise miteinander hydraulisch gekoppelt sind, weil dann eine besonders einfache und effiziente Realisierung der Ausgleichseinrichtung möglich ist.

Insbesondere kann es vorgesehen sein, dass die Ausgleichseinrichtung derart ausgebildet ist, dass ein erstes Stützrad durch eine Bodenunebenheit in eine erste Richtung bewegt wird und ein mit dem ersten Stützrad gekoppeltes zweites Stützrad durch die Ausgleichseinrichtung in eine der ersten Richtung entgegengesetzte zweite Richtung bewegt wird. Dadurch ist es vorteilhaft möglich, Bodenunebenheiten besonders effizient auszugleichen, weil die Stützräder in entgegengesetzte Richtungen bewegt werden können. Dadurch können die Stützräder stets Kontakt mit dem Boden haben, so dass das Gewicht der Vorrichtung selbst bei Bodenunebenheiten gleichmäßig auf die Stützräder verteilt werden kann.

Es kann weiterhin vorgesehen sein, dass die Ausgleichseinrichtung derart ausgebildet ist, dass das erste Stützrad durch die Bodenunebenheit vertikal nach oben bewegt wird und das zweite Stützrad durch die Ausgleichseinrichtung vertikal nach unten bewegt wird. Durch die vertikale Ausgleichsbewegung können Bodenunebenheiten besonders effizient ausgeglichen werden, weil dadurch Höhenunterschiede im Boden besonders gut ausgeglichen werden können.

Es ist vorgesehen, dass die Ausgleichseinrichtung einseitig wirkende Hydraulikzylinder zur Kopplung der Stützräder aufweist. Dadurch ist eine besonders effiziente und einfache Ausbildung der Ausgleichseinrichtung erreichbar.

Weiterhin können die Stützräder und die einseitig wirkenden Hydraulikzylinder an in der Vertikalebene verschwenkbaren Schwenkarmen befestigt sein. Die Schwenkarme können beispielsweise an einem Tragrahmen oder einem Querbalken der Vorrichtung in der Vertikalebene verschwenkbar gelagert sein.

Weiterhin kann es vorgesehen sein, dass die einseitig wirkenden Hydraulikzylinder über in ihren unteren Bereichen angeordnete Flüssigkeitsöffnungen durch Flüssigkeitsleitungen hydraulisch miteinander verbunden sind, wobei die Gesamtflüssigkeitsmengen in den Hydraulikzylindern und den Flüssigkeitsleitungen konstant sind. Diese Anordnung ermöglicht, dass die Ausgleichseinrichtung autark bzw. unabhängig beispielsweise von dem übrigen Hydrauliksystem der Vorrichtung ausgebildet werden kann. Es ist insbesondere keine Flüssigkeitsverbindung zwischen der Ausgleichseinrichtung und dem Hydrauliksystem der Vorrichtung erforderlich. Dadurch wird die Konstruktion der Ausgleichseinrichtung erheblich vereinfacht.

Außerdem ist vorgesehen, dass in den einseitig wirkenden Hydraulikzylindern Kolben angeordnet sind, die ausschließlich auf einer Kolbenseite mit Flüssigkeit beaufschlagbar sind, wobei die Hydraulikzylinder in Bezug auf die Kolben beweglich sind. Dadurch wird ermöglicht, dass sich ein erstes Stützrad und ein daran befestigter erster Hydraulikzylinder aufgrund einer Bodenunebenheit bewegen und durch diese Bewegung aufgrund des in Bezug auf den ersten Hydraulikzylinder unbeweglich angeordneten ersten Kolbens Flüssigkeit aus dem ersten Hydraulikzylinder verdrängt bzw. gedrückt wird. Die verdrängte Flüssigkeit gelangt durch die Verbindungsleitung in den zweiten Zylinder und wirkt auf den zweiten Kolben. Da der zweite Kolben unbeweglich ist, wird der zweite Zylinder bewegt, um Platz für die Flüssigkeit zu schaffen. So ist eine besonders effiziente Ausbildung der Ausgleichseinrichtung erreichbar.

Insbesondere kann es vorgesehen sein, dass die Bodenbearbeitungsvorrichtung mindestens zwei doppelseitig wirkende Hydraulikzylinder aufweist, die zur Höhenverstellung der Stützräder ausgebildet sind, und jeder doppelseitig wirkende Hydraulikzylinder über jeweils eine Kolbenstange mit jeweils einem zugeordneten einseitig wirkenden Hydraulikzylinder verbunden ist.

Die doppelseitig wirkenden Hydraulikzylinder dienen der Höhenverstellung der Stützräder, dass heißt durch Betätigung der Hydraulikzylinder beziehungsweise deren Kolben können die Stützräder vertikal verstellt werden. Diese vertikale Verstellung kann zum Beispiel vorgenommen werden, um die Stützräder in eine Arbeitsposition beziehungsweise Arbeitshöhe zu bringen. In dieser Arbeitsposition können gegebenenfalls angeordnete Bodenbearbeitungsgeräte den Boden berühren beziehungsweise kontaktieren. Über diese Höhenverstellung können die Stützräder auch aus der Arbeitsposition in eine Vorgewendeposition gebracht werden, in der die Stützräder derart weit nach unten bewegt werden, dass die Bodenbearbeitungseinheit nicht mehr den Boden kontaktieren kann, so dass ein Wenden auf dem Feld möglich ist.

Über die Höhenverstellung der Stützräder können diese somit in vertikaler Richtung zwischen verschiedenen Positionen verstellt werden. Desweiteren kann zusätzlich eine Transportposition der Stützräder vorgesehen sein, in der nur ein Teil der Stützräder den Boden kontaktiert und die restlichen Stützräder in der Luft angeordnet sind.

Vertikal gesehen unter den doppelseitig wirkenden Hydraulikzylindern können die einseitig wirkenden Hydraulikzylinder der Ausgleichseinrichtung angeordnet sein. Zwischen den doppelseitig wirkenden Hydraulikzylindern und den einseitig wirkenden Hydraulikzylindern befinden sich Kolbenstangen. Die Kolbenstangen verbinden die Kolben der doppelseitig wirkenden Hydraulikzylinder mit den einseitig wirkenden Hydraulikzylindern. Wenn nun ein Kolben der doppelseitig wirkenden Hydraulikzylinder bewegt wird, so bewegt sich der Kolben der einseitig wirkenden Hydraulikzylinder mit, da diese über die Kolbenstange verbunden sind. Außerdem können die einseitig wirkenden Hydraulikzylinder Bodenunebenheiten ausgleichen, ohne dass die Kolben der doppelseitig wirkenden Hydraulikzylinder bewegt werden. Die Ausgleichseinrichtung kann dadurch vorteilhaft autark vom Betrieb der doppelseitig wirkenden Hydraulikzylinder arbeiten.

Weitere Merkmale und Ausführungsformen der Erfindung ergeben sich aus den Ansprüchen sowie der nachfolgenden Figurenbeschreibung.

Dabei zeigen:
- Figur 1:: eine schematische Ansicht einer landwirtschaftlichen Bodenbearbeitungsvorrichtung gemäß einer beispielhaften Ausführungsform in einer ersten Arbeitskonfiguration,
- Figur 2:: eine schematische Ansicht der Vorrichtung aus Figur 1 in einer Seitenansicht,
- Figur 3:: eine schematische Ansicht eines Hydraulikschaltbilds der Vorrichtung aus Figur 1,
- Figur 4:: eine schematische Ansicht der Vorrichtung aus Figur 1 in einer zweiten Arbeitskonfiguration,
- Figur 5:: eine schematische Ansicht der Vorrichtung aus Figur 4 in einer Seitenansicht,
- Figur 6:: eine schematische Ansicht eines Hydraulikschaltbilds der Vorrichtung aus Figur 4,
- Figur 7:: eine schematische Ansicht der Vorrichtung aus Figur 1 in einer dritten Arbeitskonfiguration,
- Figur 8:: eine schematische Ansicht der Vorrichtung aus Figur 7 in einer Seitenansicht,
- Figur 9:: eine schematische Ansicht eines Hydraulikschaltbilds der Vorrichtung aus Figur 7,
- Figur 10:: eine schematische Ansicht der Vorrichtung aus Figur 1 in einer vierten Arbeitskonfiguration,
- Figur 11:: eine schematische Ansicht der Vorrichtung aus Figur 10 in einer Seitenansicht,
- Figur 12:: eine schematische Ansicht eines Hydraulikschaltbilds der Vorrichtung aus Figur 10,
- Figur 13:: eine schematische Ansicht der Vorrichtung aus Figur 1 in einer Vorgewendekonfiguration,
- Figur 14:: eine schematische Ansicht der Vorrichtung aus Figur 13 in einer Seitenansicht,
- Figur 15:: eine schematische Ansicht eines Hydraulikschaltbilds der Vorrichtung aus Figur 13.

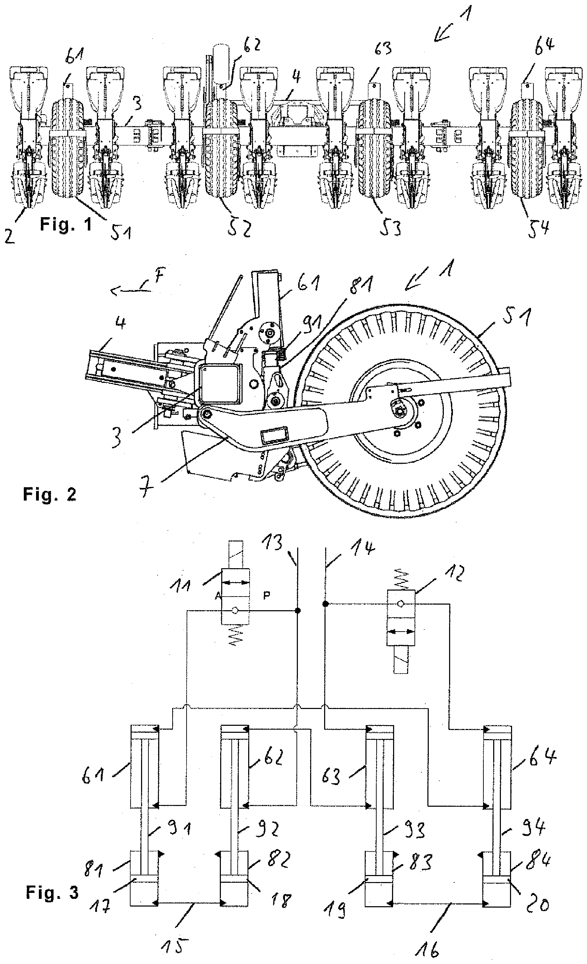

Figur 1 zeigt schematisch in einer Vorderansicht eine erfindungsgemäße landwirtschaftliche Bodenbearbeitungsvorrichtung 1 (im Folgenden auch einfach nur Vorrichtung 1 genannt) gemäß einer beispielhaften Ausführungsform in einer ersten Arbeitskonfiguration.

Die Vorrichtung 1 weist einen Tragrahmen 4 auf, mit dem die Vorrichtung 1 beispielsweise an einem Traktor befestigt werden kann. Mit diesem Tragrahmen 4 ist ein Querbalken 3 verbunden, der quer zur Fahrtrichtung F (siehe Figur 2) angeordnet ist. Am Querbalken 3 sind vorzugsweise acht Bearbeitungseinheiten 2 angeordnet, es können aber auch mehr oder weniger Bearbeitungseinheiten 2 am Querbalken 3 angeordnet sein.

Die Bearbeitungseinheiten 2 können beispielsweise Säeinheiten sein, die jeweils einen Saatgutbehälter, eine Saatzuführeinrichtung, einen Furchenzieher, eine Andruckrolle und einen Furchenschließer aufweisen.

Weiterhin weist die Vorrichtung 1 vier höhenverstellbare Stützräder (im Folgenden nur Räder genannt) 51, 52, 53, 54 auf. Außerdem weist die Vorrichtung vier doppelseitig wirkende Hydraulikzylinder 61, 62, 63, 64 zur Höhenverstellung der Räder 51, 52, 53, 54 auf. Die doppelseitig wirkenden Hydraulikzylinder 61, 62, 63, 64 sind fest mit dem Querbalken 3 verbunden.

In dieser ersten Arbeitskonfiguration sind alle Räder 51, 52, 53, 54 in derselben Höhe angeordnet, das heißt die Räder 51, 52, 53, 54 sind vertikal in derselben Position angeordnet. Diese Konfiguration liegt beispielsweise vor, wenn die Vorrichtung 1 auf einem im Wesentlichen ebenen, nicht dargestellten, Untergrund (im Folgenden auch Boden genannt) verwendet wird.

Figur 2 zeigt schematisch die Vorrichtung 1 aus Figur 1 in einer Seitenansicht. Die Vorrichtung 1 weist einen um eine Achse schwenkbaren Arm 7 auf, der im Bereich des Querbalkens 3 drehbar gelagert ist. Die Schwenkachse verläuft parallel zum Querbalken 3. Der Arm kann somit in einer Ebene senkrecht zum Querbalken 3 bewegt werden. Am anderen Ende des Arms ist das Rad 51 derart befestigt, dass das Rad 51 die Schwenkbewegung des Arms 7 mitmacht. Das Rad 51 ist um eine Drehachse drehbar, genau wie die übrigen Räder 52, 53, 54. Die Vorrichtung weist weiterhin einen einseitig wirkenden Hydraulikzylinder 81 auf, der fest mit dem Arm 7 verbunden ist. Eine Kolbenstange 91 ist mit ihrem einen Ende im doppelseitig wirkenden Hydraulikzylinder 61 und mit ihrem anderen Ende in einem einseitig wirkenden Hydraulikzylinder 81 angeordnet.

Die Figur 2 zeigt das Rad 51 in der Arbeitsposition. Die Kolbenstange 91 ist mit ihren Enden fast vollständig in die Zylinder 61 und 81 eingefahren, so dass sich der Zylinder 81 und der daran befestigte Arm 7 in der obersten Position befinden, die Arbeitsposition genannt wird. In dieser Arbeitsposition können die Bearbeitungseinheiten 2 den Boden berühren. Die Figur 2 zeigt aufgrund der seitlichen Perspektive lediglich einen einzigen Arm 7 und eine einzige Kolbenstange 91 sowie einen einzigen Zylinder 81. Die hinter dem Rad 51 angeordneten Räder 52, 53, 54 weisen ebenfalls jeweils einen Arm 7 und eine Kolbenstange 92, 93, 94 (siehe Figur 3) sowie je einen einseitig wirkenden Zylinder 82, 83, 84 (siehe Figur 3) auf.

Figur 3 zeigt schematisch ein Hydraulikschaltbild eines Hydrauliksystems der Vorrichtung 1 aus Figur 1 und Figur 2. Das Hydrauliksystem steuert die Schwenkbewegungen der Räder 51, 52, 53, 54. Das System weist zwei Hydraulikleitungen 13, 14 auf, die mit dem Hydraulikversorgungssystem eines Traktors verbunden werden können. Die Leitungen 13, 14 können sowohl als Zuführleitung als auch als Abführleitungen verwendet werden. In der Leitung 13 befindet sich ein Ventil 11, das elektrisch betätigt werden kann. In der Leitung 14 befindet sich ebenfalls ein Ventil 12, das elektrisch betätigt werden kann. Die Leitung 13 ist sowohl mit einer Seite (sogenannte Stangenseite) des Zylinders 61 als auch mit der Stangenseite des Zylinders 62 verbunden. Als Stangenseite sei diejenige Seite definiert, an der eine Kolbenstange angeordnet ist. Die andere Seite des Zylinders 61 ist mit der Stangenseite des Zylinders 64 verbunden. Die andere Seite des Zylinders 62 ist mit der Stangenseite des Zylinders 63 verbunden. Die Leitung 14 ist mit der anderen Seite des Zylinders 63 und der anderen Seite des Zylinders 64 verbunden.

Jeder doppelseitig wirkende Zylinder 61, 62, 63, 64 weist einen Kolben auf. Jeder Kolben ist mit einer Kolbenstange 91, 92, 93, 94 verbunden. Jede Kolbenstange 91, 92, 93, 94 ist an ihrer anderen Seite mit einem weiteren Kolben 17, 18, 19, 20 verbunden, der in den einseitig wirkenden Zylindern 81, 82, 83, 84 angeordnet ist. Jeder einseitig wirkende Zylinder 81, 82, 83, 84 weist nur eine einzige Öffnung für die Flüssigkeit auf. Die Zylinder 81, 82 sind in ihrem unteren Bereich über eine Hydraulikleitung 15 miteinander verbunden. Auch die Zylinder 83, 84 sind in ihrem unteren Bereich über eine Hydraulikleitung 16 miteinander verbunden.

Die Figur 3 zeigt das Hydrauliksystem in einer ersten Arbeitskonfiguration bzw. Arbeitsposition. In dieser Arbeitskonfiguration sind alle Räder 51, 52, 53, 54 auf der gleichen Höhe beziehungsweise in derselben vertikalen Position angeordnet. Dieses kann beispielsweise der Fall sein, wenn die Vorrichtung 1 auf einem ebenen Boden verwendet wird (siehe Figur 1).

Zur Erreichung dieser ersten Arbeitskonfiguration, zum Beispiel aus einer Transportposition, in der sich die Räder 51, 52, 53, 54 in der untersten Position befinden, wird Druck in die Leitung 13 eingebracht und das Ventil 11 geöffnet. Die Hydraulikflüssigkeit gelangt durch die Leitung 13 in den unteren Bereich der Zylinder 61 und 62. Die Flüssigkeit drückt die Kolben der Zylinder 61 und 62 nach oben. Dadurch werden die Kolbenstangen 91, 92 nach oben bewegt, wodurch auch die Zylinder 81 und 82 nach oben gezogen werden. Da die Zylinder 81, 82 an den Armen 7 befestigt sind, werden die Räder 51, 52 ebenfalls nach oben gezogen, wobei die Räder 51, 52 an den Armen 7 um die Schwenkachsen der Arme 7 nach oben verschwenkt werden. Am Ende dieser Bewegungen befinden sich die Kolben der Zylinder 61, 62, die Räder 51, 52 sowie die Zylinder 81, 82 in der ersten Arbeitskonfiguration.

Durch die Bewegung der Kolben der Zylinder 61 und 62 nach oben wird die zuvor im oberen Bereich der Zylinder 61 und 62 befindliche Hydraulikflüssigkeit in den unteren Bereich der Zylinder 63 und 64 gedrückt. Dadurch werden in den Zylindern 63 und 64 die Kolben nach oben gedrückt, wodurch, analog zu den Zylindern 61 und 62, die Kolbenstangen 93, 94 nach oben bewegt werden, wodurch auch die Zylinder 83 und 84 nach oben gezogen werden. Da die Zylinder 83 und 84 an den Armen 7 befestigt sind, werden die Räder 53, 54 ebenfalls nach oben gezogen, wobei die Räder 53, 54 an den Armen 7 um die Schwenkachsen der Arme 7 nach oben verschwenkt werden. Am Ende dieser Bewegungen befinden sich die Kolben der Zylinder 63, 64, die Räder 53, 54 sowie die Zylinder 83, 84 in der ersten Arbeitskonfiguration.

Die Figuren 1-3 zeigen die Vorrichtung in der ersten Arbeitskonfiguration, wobei die Vorrichtung 1 auf ebenem Boden, das heißt ohne bemerkenswerte Bodenunebenheiten, bewegt wird. Die nachfolgenden Figuren zeigen die Vorrichtung in weiteren Arbeitskonfigurationen, wobei Bodenunebenheiten durch Bewegungen der Räder ausgeglichen werden. Der grundlegende Aufbau beziehungsweise die prinzipielle Funktionsweise ist wie in den Figuren 1-3 beschrieben, daher wird auf die obigen Ausführungen verwiesen.

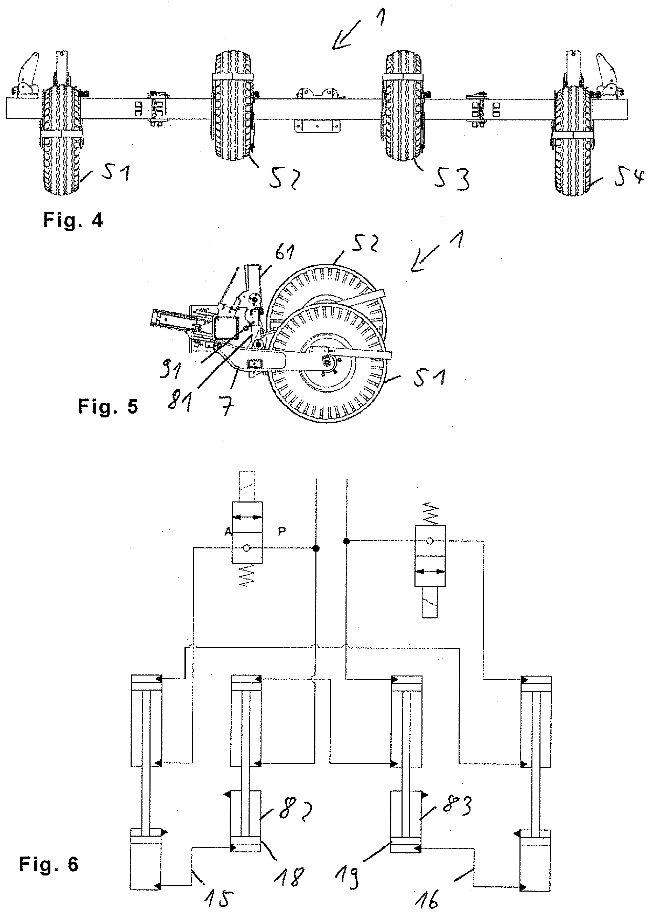

Figur 4 zeigt die Vorrichtung 1 aus der Figur 1 in einer zweiten Arbeitskonfiguration. Der Aufbau und die Funktionsweise sind wie in den Figuren 1-3 beschrieben. In dieser zweiten Arbeitskonfiguration befindet sich die Vorrichtung 1 auf einem Boden, der in diesem Bereich Unebenheiten aufweist. Hier befinden sich die beiden äußeren Räder 51, 54 in einer unteren Position und die mittleren Räder 52, 53 befinden sich in einer oberen Position. Dies kann zum Beispiel auftreten, wenn der Boden im Querschnitt gesehen konvex ausgebildet ist, das heißt wenn der Boden in der Mitte höher ist als in den äußeren Bereichen.

Die Figur 5 zeigt die Vorrichtung aus Figur 4 in einer Seitenansicht. Der Aufbau und die Funktionsweise sind in den Figuren 1-3 beschrieben. In dieser zweiten Arbeitskonfiguration ist das Rad 51 unter dem Rad 52 angeordnet, damit beide Räder 51, 52 Bodenkontakt haben und die Vorrichtung 1 optimal abstützen können. In dieser Konfiguration ist die Kolbenstange 91 zwischen den Zylindern 61, 81 weiter ausgefahren als in der Figur 2, so dass der Arm 7 mit dem Rad 51 weiter nach unten verschwenkt werden kann.

Die Figur 6 zeigt das Hydraulikschaltbild des Hydrauliksystems für die Konfiguration aus den Figuren 4 und 5. Die Kolben der doppelseitig wirkenden Zylinder befinden sich nach wie vor in der obersten Position, so dass sich die Räder 51, 52, 53, 54 beziehungsweise die Zylinder 81, 82, 83, 84 in der Arbeitskonfiguration befinden. Im Unterschied zur Figur 3 ist hier jedoch eine Bodenunebenheit auszugleichen. Da die mittleren Räder 52, 53 durch den konvexen Boden nach oben gedrückt werden, werden auch die Zylinder 82, 83 nach oben gedrückt. Da die Kolbenstangen 92, 93 beziehungsweise die Kolben 18, 19 der Zylinder 82, 83 unbewegt bleiben, wird die Hydraulikflüssigkeit aus den unteren Bereichen der Zylinder 82, 83 in die unteren Bereiche der äußeren Zylinder 81, 84 gedrückt, so dass die Zylinder 81, 84 nach unten bewegt werden, weil die Kolbenstangen 91, 94 unbewegt bleiben. Mit den Zylindern 81, 84 bewegen sich dann auch die äußeren Räder 51, 54 nach unten, bis sie den konvexen Boden berühren und die Vorrichtung 1 wieder abstützen können.

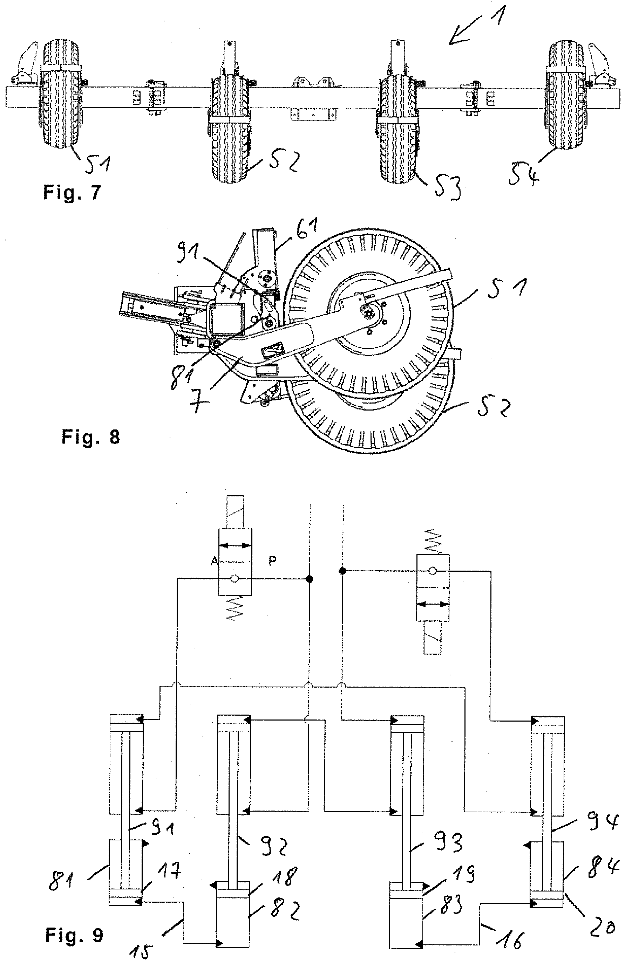

Figur 7 zeigt die Vorrichtung 1 aus der Figur 1 in einer dritten Arbeitskonfiguration. Der Aufbau und die Funktionsweise sind wie in den Figuren 1-3 beschrieben. In dieser dritten Arbeitskonfiguration befindet sich die Vorrichtung 1 auf einem Boden, der in diesem Bereich Unebenheiten aufweist. Hier befinden sich die beiden äußeren Räder 51, 54 in einer oberen Position und die mittleren Räder 52, 53 befinden sich in einer unteren Position. Dies kann zum Beispiel auftreten, wenn der Boden im Querschnitt gesehen konkav ausgebildet ist, das heißt wenn der Boden in der Mitte tiefer ist als in den äußeren Bereichen.

Die Figur 8 zeigt die Vorrichtung aus Figur 7 in einer Seitenansicht. Der Aufbau und die Funktionsweise sind in den Figuren 1-3 beschrieben. In dieser dritten Arbeitskonfiguration ist das Rad 51 über dem Rad 52 angeordnet, damit beide Räder 51, 52 Bodenkontakt haben und die Vorrichtung 1 optimal abstützen können. In dieser Konfiguration ist die nicht dargestellte Kolbenstange 92 zwischen den nicht dargestellten Zylindern 62, 82 weiter ausgefahren als die Kolbenstange 91 zwischen den Zylindern 61 und 81, so dass das Rad 52 weiter nach unten ausgefahren ist als das Rad 51.

Die Figur 9 zeigt das Hydraulikschaltbild des Hydrauliksystems für die Konfiguration aus den Figuren 7 und 8. Die Kolben der doppelseitig wirkenden Zylinder befinden sich nach wie vor in der obersten Position, so dass sich die Räder 51, 52, 53, 54 bzw. die Zylinder 81, 82, 83, 84 in der Arbeitskonfiguration befinden. Im Unterschied zur Figur 3 ist hier jedoch eine Bodenunebenheiten auszugleichen. Da die äußeren Räder 51, 54 durch den konkaven Boden nach oben gedrückt werden, werden auch die Zylinder 81, 84 nach oben gedrückt. Da die Kolbenstangen 91, 94 beziehungsweise die Kolben der Zylinder 81, 84 unbewegt bleiben, wird die Hydraulikflüssigkeit aus den unteren Bereichen der Zylinder 81, 84 in die unteren Bereiche der mittleren Zylinder 82, 83 gedrückt, so dass die Zylinder 82, 83 nach unten bewegt werden, weil die Kolbenstangen 92, 93 unbewegt bleiben. Mit den Zylindern 82, 83 bewegen sich dann auch die mittleren Räder 52, 53 nach unten, bis sie den konkaven Boden berühren und die Vorrichtung 1 wieder abstützen können.

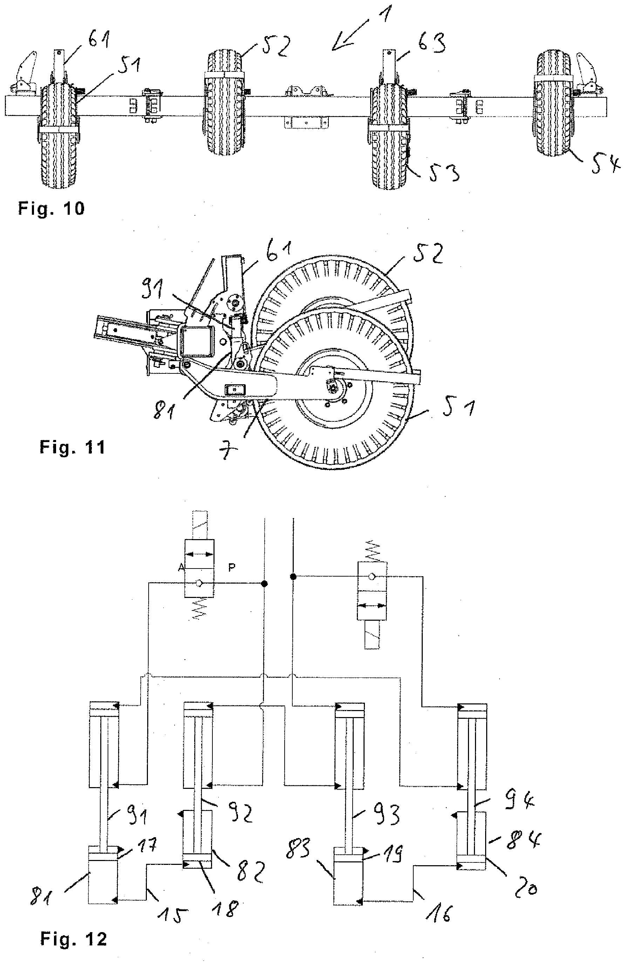

Figur 10 zeigt die Vorrichtung 1 aus der Figur 1 in einer vierten Arbeitskonfiguration. Der Aufbau und die Funktionsweise sind wie in den Figuren 1-3 beschrieben. In dieser vierten Arbeitskonfiguration befindet sich die Vorrichtung 1 auf Boden, der Unebenheiten aufweist. Dazu befinden sich die Räder 52, 54 in einer oberen Position und die Räder 51, 53 befinden sich in einer unteren Position. Dies kann zum Beispiel auftreten, wenn der Boden im Querschnitt gesehen wellig ist, dass heißt wenn der Boden von links nach rechts gesehen erst tiefer (im Bereich des Rades 51), dann höher (Rad 52), dann wieder tiefer (Rad 53) und dann wieder höher (Rad 54) ausgebildet ist.

Die Figur 11 zeigt die Vorrichtung aus Figur 10 in einer Seitenansicht. Der Aufbau und die Funktionsweise sind in den Figuren 1-3 beschrieben. In dieser vierten Arbeitskonfiguration ist das Rad 51 unter dem Rad 52 angeordnet, damit beide Räder 51, 52 Bodenkontakt haben und die Vorrichtung 1 optimal abstützen können. In dieser Konfiguration ist die nicht dargestellte Kolbenstange 91 zwischen den Zylindern 61, 81 weiter ausgefahren als die Kolbenstange 92 zwischen den Zylindern 62 und 82, so dass das Rad 51 weiter nach unten ausgefahren ist als das Rad 52. Diese Konfiguration der Räder 51, 52 entspricht der Konfiguration, die in der Figur 5 beschrieben worden ist, so dass darauf verwiesen werden kann.

Die Figur 12 zeigt das Hydraulikschaltbild des Hydrauliksystems für die Konfiguration aus den Figuren 10 und 11. Die Kolben der doppelseitig wirkenden Zylinder befinden sich nach wie vor in der obersten Position, so dass sich die Räder 51, 52, 53, 54 bzw. die Zylinder 81, 82, 83, 84 in der Arbeitskonfiguration befinden. Im Unterschied zur Figur 3 ist hier jedoch eine Bodenunebenheiten auszugleichen. Da die Räder 52 und 54 durch den welligen Boden nach oben gedrückt werden, werden auch die Zylinder 82, 84 nach oben gedrückt. Da die Kolbenstangen 92, 94 bzw. die Kolben der Zylinder 82, 84 unbewegt bleiben, wird die Hydraulikflüssigkeit aus den unteren Bereichen der Zylinder 82, 84 in die unteren Bereiche der Zylinder 81, 83 gedrückt, so dass die Zylinder 81, 83 nach unten bewegt werden, weil die Kolbenstangen 91, 93 unbewegt bleiben. Mit den Zylindern 81, 83 bewegen sich dann auch die Räder 51, 53 nach unten, bis sie den welligen Boden berühren und die Vorrichtung 1 wieder abstützen können.

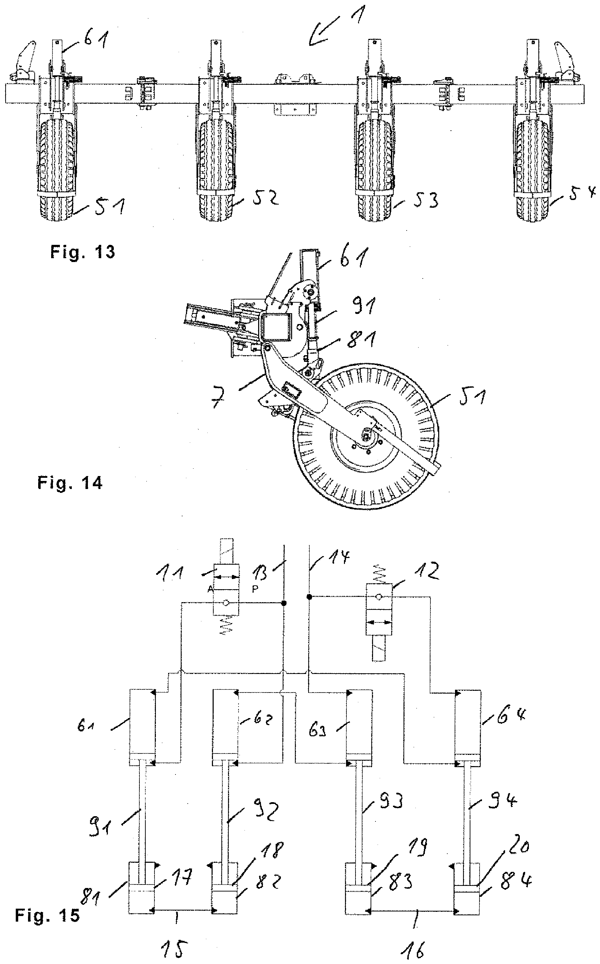

Figur 13 zeigt schematisch die Vorrichtung 1 in der Vorgewende-Position bzw. Vorgewende-Konfiguration und nicht mehr in der Arbeitsposition. In der Vorgewende-Konfiguration sind alle Räder nach unten ausgefahren, so dass die Bearbeitungseinheiten 2, im Gegensatz zur Arbeitsposition, nicht den Boden berühren können. Diese Konfiguration wird beispielsweise verwendet, wenn die Vorrichtung 1 umgedreht werden muss.

Figur 14 zeigt die Vorrichtung 1 aus der Figur 13 in einer Seitenansicht. Die Kolbenstange 91 ist vergleichsweise weit ausgefahren, so dass das Rad 51 vergleichsweise weit nach unten bewegt ist. Figur 15 zeigt ein Hydraulikschaltbild der Vorrichtung in der Vorgewende-Position. Das Umstellen von der Arbeitsposition in die Vorgewende-Position erfolgt derart, dass Druck auf die Leitung 14 gegeben wird und das Ventil 12 geöffnet wird. Die Hydraulikflüssigkeit drückt in die oberen Bereiche der Zylinder 63 und 64, so dass die darin befindlichen Kolben und die Hydraulikstangen 93, 94 nach unten gedrückt werden. Die Hydraulikstangen 93, 94 drücken die Zylinder 83, 84 nach unten, so dass auch die Räder 53, 54 nach unten gedrückt werden.

Außerdem drücken die Kolben der Zylinder 63, 64 Hydraulikflüssigkeit in die oberen Bereiche der Zylinder 61, 62. Dadurch werden die darin befindlichen Kolben nach unten gedrückt, wodurch auch die Kolbenstangen 91, 92 nach unten gedrückt werden. Die Hydraulikstangen 91, 92 drücken die Zylinder 81, 82 nach unten, so dass auch die Räder 51, 52 nach unten gedrückt werden. Auch in der Vorgewende-Position können Bodenunebenheiten wie in der Arbeitsposition ausgeglichen werden. Dazu sind die Zylinder 81 und 82 sowie die Zylinder 83 und 84 in ihren unteren Bereichen über jeweils eine Ausgleichsleitung hydraulisch miteinander gekoppelt. Der Ausgleich der Bodenunebenheiten erfolgt genauso wie in der Arbeitsposition, so dass auf die Ausführungen zu den Figuren 1-12 verwiesen werden kann. Prinzipiell können also auch in der Vorgewende-Position die in den Figuren 1-12 beschriebenen Konfigurationen und noch andere vorkommen. Daher soll auf die obigen Beschreibungen verwiesen werden.

### Bezugszeichenliste

- 1: landwirtschaftliche Bodenbearbeitungsvorrichtung
- 2: Bearbeitungseinheit
- 3: Querbalken
- 4: Tragrahmen
- 51, 52: Stützrad
- 53, 54: Stützrad
- 61, 62: doppelseitig wirkender Zylinder
- 63, 64: doppelseitig wirkender Zylinder
- 7: Schwenkarm
- 81, 82: einseitig wirkender Zylinder
- 83, 84: einseitig wirkender Zylinder
- 91, 92: Kolbenstange
- 93, 94: Kolbenstange
- 11, 12: Ventil
- 13, 14: Hydraulikleitung
- 15, 16: Verbindungsleitung
- 17, 18: Kolben
- 19, 20: Kolben
- F: Fahrtrichtung

## Patentansprüche

1. Landwirtschaftliche Bodenbearbeitungsvorrichtung (1), aufweisend Stützräder (51, 52, 53, 54) zur Abstützung der Bodenbearbeitungsvorrichtung (1) auf dem Boden,
wobei
mindestens zwei der Stützräder (51, 52, 53, 54) über eine hydraulisch ausgebildete Ausgleichseinrichtung (81, 82, 83, 84) zur Ausgleichung von Bodenunebenheiten miteinander gekoppelt sind, **dadurch gekennzeichnet, dass** die Ausgleichseinrichtung (81, 82, 83, 84) einseitig wirkende Hydraulikzylinder (81, 82, 83, 84) zur Kopplung der Stützräder (51, 52, 53, 54) aufweist, wobei in den einseitig wirkenden Hydraulikzylindern (81, 82, 83, 84) Kolben (17, 18, 19, 20) angeordnet sind, die ausschließlich auf einer Kolbenseite mit Flüssigkeit beaufschlagbar sind, wobei die Hydraulikzylinder (81, 82, 83, 84) in Bezug auf die Kolben (17, 18, 19, 20) beweglich sind.

2. Landwirtschaftliche Bodenbearbeitungsvorrichtung (1) gemäß Anspruch 1, **dadurch gekennzeichnet, dass** die Stützräder (51, 52, 53, 54) paarweise miteinander hydraulisch, gekoppelt sind.

3. Landwirtschaftliche Bodenbearbeitungsvorrichtung (1) gemäß einem der vorhergehenden Ansprüche, **dadurch gekennzeichnet, dass** in horizontaler Richtung benachbart angeordnete Stützräder (51, 52, 53, 54) hydraulisch miteinander gekoppelt sind.

4. Landwirtschaftliche Bodenbearbeitungsvorrichtung (1) gemäß einem der vorhergehenden Ansprüche, **dadurch gekennzeichnet, dass** die Ausgleichseinrichtung (81, 82, 83, 84) derart ausgebildet ist, dass ein erstes Stützrad (51, 52, 53, 54) durch eine Bodenunebenheiten in eine erste Richtung bewegt wird und ein mit dem ersten Stützrad (51, 52, 53, 54) hydraulisch gekoppeltes zweites Stützrad (51, 52, 53, 54) durch die Ausgleichseinrichtung (81, 82, 83, 84) in eine der ersten Richtung entgegengesetzte zweite Richtung bewegt wird.

5. Landwirtschaftliche Bodenbearbeitungsvorrichtung (1) gemäß Anspruch 4, **dadurch gekennzeichnet, dass** die Ausgleichseinrichtung (81, 82, 83, 84) derart ausgebildet ist, dass das erste Stützrad (51, 52, 53, 54) durch die Bodenunebenheiten vertikal nach oben bewegt wird und das zweite Stützrad (51, 52, 53, 54) durch die Ausgleichseinrichtung (81, 82, 83, 84) vertikal nach unten bewegt wird.

6. Landwirtschaftliche Bodenbearbeitungsvorrichtung (1) gemäß Anspruch 1, **dadurch gekennzeichnet, dass** die Stützräder (51, 52, 53, 54) und die einseitig wirkenden Hydraulikzylinder (81, 82, 83, 84) an in der Vertikalebene verschwenkbaren Schwenkarmen (7) befestigt sind.

7. Landwirtschaftliche Bodenbearbeitungsvorrichtung (1) gemäß Anspruch 1 oder 6, **dadurch gekennzeichnet, dass** die einseitig wirkenden Hydraulikzylinder (81, 82, 83, 84) über in ihren unteren Bereichen angeordnete Flüssigkeitsöffnungen durch Flüssigkeitsleitungen (15, 16) hydraulisch miteinander verbunden sind, wobei die Gesamtflüssigkeitsmengen in den Hydraulikzylindern (81, 82, 83, 84) und den Flüssigkeitsleitungen (15, 16) konstant sind.

8. Landwirtschaftliche Bodenbearbeitungsvorrichtung (1) gemäß einem der vorhergehenden Ansprüche, **dadurch gekennzeichnet, dass** die Bodenbearbeitungsvorrichtung (1) mindestens zwei doppelseitig wirkende Hydraulikzylinder (61, 62, 63, 64) aufweist, die zur Höhenverstellung der Stützräder (51, 52, 53, 54) ausgebildet sind, und jeder doppelseitig wirkende Hydraulikzylinder (61, 62, 63, 64) über jeweils eine Kolbenstange (91, 92, 93, 94) mit jeweils einem zugeordneten einseitig wirkenden Hydraulikzylinder (81, 82, 83, 84) verbunden ist.

## Claims

1. An agricultural soil cultivating device (1), comprising support wheels (51, 52, 53, 54) for supporting the soil cultivating device (1) on the ground,
wherein
at least two of the support wheels (51, 52, 53, 54) are coupled to one another for offsetting soil irregularities by way of a hydraulically designed offsetting device (81, 82, 83, 84) **characterized in that** the offsetting device (81, 82, 83, 84) comprises single-acting hydraulic cylinders (81, 82, 83, 84) for coupling the support wheels (51, 52, 53, 54), wherein in the single-acting hydraulic cylinders (81, 82, 83, 84) pistons (17, 18, 19, 20) are arranged, which are exclusively loadable with liquid on a piston side, wherein the hydraulic cylinders (81, 82, 83, 84) are moveable relative to the pistons (17, 18, 19, 20).

2. The agricultural soil cultivating device (1) according to claim 1, **characterized in that** the support wheels (51, 52, 53, 54) are hydraulically coupled to one another in pairs.

3. The agricultural soil cultivating device (1) according to any one of the preceding claims, **characterized in that** support wheels (51, 52, 53, 54) which are arranged adjacent to one another in the horizontal direction, are hydraulically coupled to one another.

4. The agricultural soil cultivating device (1) according to any one of the preceding claims, **characterized in that** the offsetting device (81, 82, 83, 84) is designed in such a manner that a first support wheel (51, 52, 53, 54) is moved by a soil irregularity in a first direction and a second support wheel (51, 52, 53, 54) that is hydraulically coupled to the first support wheel (51, 52, 53, 54) is moved by the offsetting device (81, 82, 83, 84) in a second direction that is opposite to the first direction.

5. The agricultural soil cultivating device (1) according to claim 4, **characterized in that** the offsetting device (81, 82, 83, 84) is designed in such a manner that the first support wheel (51, 52, 53, 54) is moved vertically upwards by the soil irregularities and the second support wheel (51, 52, 53, 54) is moved vertically downwards by the offsetting device (81, 82, 83, 84).

6. The agricultural soil cultivating device (1) according to claim 1, **characterized in that** the support wheels (51, 52, 53, 54) and the single-acting hydraulic cylinders (81, 82, 83, 84) are attached to pivot arms (7) that are pivotable in the vertical plane.

7. The agricultural soil cultivating device (1) according to claim 1 or 6, **characterized in that** the single-acting
hydraulic cylinders (81, 82, 83, 84) are hydraulically connected to one another by liquid lines (15, 16) arranged in their lower regions, wherein the total liquid quantities in the hydraulic cylinders (81, 82, 83, 84) and the liquid lines (15, 16) are constant.

8. The agricultural soil cultivating device (1) according to any one of the preceding claims, **characterized in that** the soil cultivating device (1) comprises at least two double-acting hydraulic cylinders (61, 62, 63, 64), which are designed for the height adjustment of the support wheels (51, 52, 53, 54) and each double-acting hydraulic cylinder (61, 62, 63, 64) is connected via a piston rod (91, 92, 93, 94) in each case to a single-acting hydraulic cylinder (81, 82, 83, 84) that is assigned in each case.

## Revendications

1. Dispositif agricole de labourage (1), présentant des roues d'appui (51, 52, 53, 54) pour l'appui du dispositif de labourage (1) sur le sol,
dans laquelle
au moins deux des roues d'appui (51, 52, 53, 54) sont couplées entre elles par un dispositif de compensation de type hydraulique (81, 82, 83, 84) pour la compensation des irrégularités du sol, **caractérisé en ce que** le dispositif de compensation (81, 82, 83, 84) présente des vérins hydrauliques à action unilatérale (81, 82, 83, 84) pour le couplage des roues d'appui (51, 52, 53, 54), étant disposés dans les vérins hydrauliques à action unilatérale (81, 82, 83, 84) des pistons (17, 18, 19, 20) qui peuvent être sollicités exclusivement sur un côté de piston avec du liquide, les vérins hydrauliques (81, 82, 83, 84) étant mobiles par rapport aux pistons (17, 18, 19, 20).

2. Dispositif agricole de labourage (1) selon la revendication 1, **caractérisé en ce que** les roues d'appui (51, 52, 53, 54) sont couplées entre elles par paires par système hydraulique.

3. Dispositif agricole de labourage (1) selon une des revendications précédentes, **caractérisé en ce que** des roues d'appui (51, 52, 53, 54) disposées adjacentes dans le sens horizontal sont couplées entre elles par paires par système hydraulique.

4. Dispositif agricole de labourage (1) selon une des revendications précédentes, **caractérisé en ce que** le dispositif de compensation (81, 82, 83, 84) est réalisé de manière à ce qu'une première roue d'appui (51, 52, 53, 54) soit déplacée du fait des irrégularités du sol dans un premier sens et qu'une seconde roue d'appui (51, 52, 53, 54) couplée par système hydraulique à la première roue d'appui (51, 52, 53, 54) soit déplacée par le dispositif de compensation (81, 82, 83, 84) dans un second sens opposé au premier sens.

5. Dispositif agricole de labourage (1) selon la revendication 4, **caractérisé en ce que** le dispositif de compensation (81, 82, 83, 84) est réalisé de manière à ce qu'une première roue d'appui (51, 52, 53, 54) soit déplacée verticalement vers le haut du fait des irrégularités du sol et que la seconde roue d'appui (51, 52, 53, 54) soit déplacée verticalement vers le bas par le dispositif de compensation (81, 82, 83, 84).

6. Dispositif agricole de labourage (1) selon la revendication 1, **caractérisé en ce que** les roues d'appui (51, 52, 53, 54) et les vérins hydrauliques à action unilatérale (81, 82, 83, 84) sont fixés au bras pivotant (7) pivotable dans le plan vertical.

7. Dispositif agricole de labourage (1) selon la revendication 1 ou 6, **caractérisé en ce que** les vérins hydrauliques à action unilatérale (81, 82, 83, 84) sont raccordés entre eux par système hydraulique par l'intermédiaire d'orifices à liquide pratiqués dans leurs parties inférieures par des conduites de liquide (15, 16), les quantités totales de liquide dans les vérins hydrauliques (81, 82, 83, 84) et les conduites de liquide (15, 16) étant constantes.

8. Dispositif agricole de labourage (1) selon une des revendications précédentes, **caractérisé en ce que** le dispositif de labourage (1) présente au moins deux vérins hydrauliques à action bilatérale (61, 62, 63, 64) qui sont conçus pour le réglage en hauteur des roues d'appui (51, 52, 53, 54), et que chaque vérin hydraulique à action bilatérale (61, 62, 63, 64) est raccordé respectivement par une tige de piston (91, 92, 93, 94) à respectivement un vérin hydraulique à action unilatérale (81, 82, 83, 84) qui lui est associé.
